# EUROPEAN PATENT SPECIFICATION

(11) **EP 4 645 658 B1**
(45) Date of publication and mention of the grant of the patent: **24.06.2026**
(21) Application number: 25170416.9
(22) Date of filing: 14.04.2025
(51) Int. Cl.: H02K 15/02, H02K 15/021

(54) **DEVICE FOR COLLECTING AND EVACUATING STACKS OF BLANKED AND STACKED LAMINATIONS**
VORRICHTUNG ZUM SAMMELN UND ABTRANSPORTIEREN VON STAPELN VON GESTANZTEN UND GESTAPELTEN LAMELLEN
DISPOSITIF POUR COLLECTER ET EVACUER DES PILES DE TÔLES DECOUPÉES ET EMPILÉES

(30) Priority: 03.05.2024 IT 202400009925
(43) Date of publication of application: 05.11.2025
(73) Proprietor: Ernesto Malvestiti S.p.A., 20092 Cinisello Balsamo (MI) (IT)
(72) Inventor: VERDINO, Lino, 20092 Cinisello Balsamo (MI) (IT)
(74) Representative: Valentini, Giuliano

(56) References cited:
- CN-A- 115 592 005
- JP-A- 2013 010 120

## Description

### Technical field of the invention

The present invention concerns a device for collecting and evacuating blanked and stacked laminations in a blanking tool in which the blanking die lies and, in particular, a device embedded in the lower tool half which is arranged above an apparatus for collecting and transferring completed stacks of laminations.

### State of the art

The stators and rotors of some types of electric motors are made by packing a plurality of suitably shaped laminations of ferromagnetic material. Usually, individual laminations are made from metal laminates which can previously be calendared before being subjected to stamping and blanking processes. The laminations thus obtained are stacked together in a pre-set number and, possibly, fastened together in each stack to form the rotor or stator of an electric motor.

However, metal laminates subjected to blanking can in any case have differences in thickness, which can be found between the different portions of each lamination. Once a stack of laminations has been completed, the differences in thickness can compromise the correct geometry (parallelism, perpendicularity, cylindricity, concentricity, etc.) of the stack consisting of the individual laminations. This can be overcome by compensation, which consists of stacking the laminations in such a way that the mass of the stack is evenly distributed with respect to its axis. In practice, each lamination is rotated immediately after it has been blanked at a pre-set angle, with respect to the adjacent underlying lamination that has been blanked previously. This way, any inhomogeneities in thickness of each individual lamination can be evenly distributed with respect to the axis of rotation of the stack of laminations.

Usually, laminations can be stably coupled together to form a compact stack of stacked laminations. The coupling between the laminations can be made, for example, by providing each lamination with one or more connecting elements, i.e. "caulking fasteners". Typically, the laminations can be stacked and packed during the production step, directly into the tool and during the blanking step, by inserting the protruding part of each caulking fastener of a lamination into the corresponding seat located in the lamination blanked immediately before.

The blanking tools are provided with a die that, in cooperation with a punch, blanks the metal laminate fed to the blanking tool, thus separating the individual laminations from the metal laminate fed to the tool. The punch is constrained to a portion of the tool, also identifiable as an upper tool half, which moves vertically and alternately on the laminate; the latter remains interposed between the punch and the die. The laminate feeding motion is coordinated with the punch movement in such a way that, with each lowering of the punch, new portions of the laminate are intercepted by the punch and die to be punched.

When compensation of the stack of laminations is required, the tool is equipped with a die that can rotate about its own axis. The rotatable die, housed in the lower portion of the tool (lower tool half), makes each individual lamination (or stacks of laminations that are not rotated from one another) offset at an angle with respect to the previously blanked lamination, in such a way as to compensate for any inhomogeneities in the distribution, with respect to the axis, of the mass of the stack of laminations to be made.

In practice, the operation of the tool provides that the punch and die blank any lamination, and after the punch has been lifted with respect to the laminate and the laminate has been moved forward, the die is rotated about its own axis by a pre-set angle (clockwise/counterclockwise). The punch is pushed again on the laminate to blank a subsequent lamination. The latter shall be offset at an angle with respect to the previously blanked lamination. The offset angle corresponds to the angle of rotation of the die.

The die is fastened to a supporting sleeve rotatably constrained to the lower tool half. The sleeve is inserted into a seat of the lower tool half; a special motor rotates the sleeve, and therefore also the die, by the desired offset angle.

In some cases, it can be necessary to form stacks of laminations which are separated from each other, i.e. without providing the "caulking fasteners" that would lead to the formation of an assembled stack. Each completed stack of laminations must then be evacuated from the sleeve onto an apparatus for collecting and transferring stacks of laminations, while maintaining the correct alignment, which is offset at an angle, of the laminations of the completed stack. Therefore, when a completed stack of laminations is evacuated from the sleeve, the latter should be immovable so as not to compromise the correct composition of the completed stack and allow a correct evacuation thereof. But this also implies stopping the process of blanking additional laminations and, in particular, stopping the rotation of the sleeve and the die combined therewith. This would then lead to a slowdown in the formation of subsequent stacks of laminations, thus compromising the productivity of the process of forming stacks of laminations.

Documents JP2013010120 A, CN115592005 A relate to devices for collecting and evacuating completed stacks.

### Summary of the invention

Object of the present invention is to provide a device and a process that allow the collection and evacuation from the tool of completed stacks of blanked and stacked laminations, while maintaining the correct angular offset between the laminations of each stack, especially in the case that each completed stack is composed of separate laminations not constrained to each other.

It is also an object of the present invention to provide a device and a process that allow the collection and evacuation of complete stacks of blanked and stacked laminations from the tool while limiting, or at most eliminating, the stopping of the process of blanking subsequent laminations and the formation of additional stacks of laminations.

These and other objects are achieved by the present invention, which concerns a device for collecting and evacuating stacks of blanked and stacked laminations according to claim 1 from the tool. Further peculiar characteristics of the present invention are found in the respective dependent claims.

Usually, a device for collecting and evacuating stacks of blanked and stacked laminations from the tool is embedded in a blanking tool having an upper tool half and a lower tool half. The device comprises at least one sleeve which can be rotated about the axis of a blanking die to which it is rotatably constrained. The sleeve is embedded in the lower tool half and is placed on top of an apparatus for collecting and transferring stacks of laminations.

In an embodiment of the present invention, the sleeve comprises an upper portion, an intermediate portion and a lower portion. The upper portion and the intermediate portion of the sleeve are permanently rotatably connected to the blanking die, and an engaging member can be control-actuated to rotatably connect the lower portion of the sleeve to the intermediate/upper portion, or release the rotatable connection of the lower portion of the sleeve with respect to the intermediate/upper portion.

This way, when it is necessary to evacuate a completed stack from the sleeve, the rotatable connection of only the lower portion of the sleeve can be released, in such a way that the completed stack housed in the lower portion of the sleeve can be evacuated without compromising the correct axial alignment of the laminations, especially in the event that they are not mutually constrained. At the same time, the upper and intermediate portions can rotate together with the blanking die without interrupting the process of blanking and stacking subsequent laminations.

In an embodiment, each upper, intermediate and lower portion of the sleeve is equipped with movable stopping elements, which can be control-actuated, for holding and releasing the sliding of a completed stack of blanked laminations through the sleeve.

In particular, the stopping elements are movable between a hold position, in which their free ends protrude inwards with respect to the inner surface of each portion of the sleeve to support a completed stack of laminations, and a release position in which their free ends are concealingly retracted with respect to the inner surface of each portion of the sleeve to allow the completed stack of laminations to pass through.

The movable stopping elements of the upper and intermediate portions of the sleeve can be operated, for example, by means of actuators embedded in the blanking tool.

In an embodiment of the present invention, the sleeve is cylindrically shaped and has an axis coinciding with the axis of the blanking die.

A device according to the present invention can, for example, be embedded in a blanking tool for manufacturing laminations, wherein each lamination is rotated by a pre-set angle with respect to a previously blanked lamination. The blanked laminations are then collected in stacks composed of a pre-set number of laminations inside a sleeve before evacuating each stack from the tool towards an apparatus for collecting and transferring stacks of laminations. The invention further relates to a process for collecting and evacuating completed stacks of blanked and stacked laminations in a blanking tool, the latter having an upper tool half and a lower tool half. The device comprises at least one sleeve which can be rotated about the axis of a blanking die to which it is rotatably constrained. The sleeve is arranged in the lower tool half with axis coinciding with the axis of the die, and an apparatus for collecting and transferring the stacks of laminations. The sleeve comprises an upper portion, an intermediate portion and a lower portion, and wherein at least the upper portion and the intermediate portion of the sleeve are permanently and rotatably connected to the blanking die.

The process comprises the steps of:
a) providing a control-actuated engaging member for rotatably connecting the lower portion of the sleeve to the intermediate/upper portion or releasing the rotatable connection of the lower portion of the sleeve with respect to the intermediate/upper portion;
b) blanking each of the laminations by rotating the blanking die each time at a pre-set angle and collecting each lamination, which is rotated with respect to the underlying one, to form a stack of a pre-set number of laminations;
c) temporarily holding the completed stack of blanked laminations from the overlying die in the upper portion of the sleeve while the process of blanking and rotating the laminations of a subsequent stack continues, wherein the rotation of the blanking die and the upper, intermediate and lower portions of the sleeve, is maintained;
d) transferring the completed stack of laminations from the upper portion to the intermediate portion of the sleeve and temporarily holding it in the intermediate portion of the sleeve;
e) transferring the completed stack of laminations from the intermediate portion to the lower portion of the sleeve and temporarily holding it in the lower portion of the sleeve;
f) actuating the engaging member for releasing the rotatable connection of the lower portion of the sleeve with respect to the intermediate/upper portion;
g) evacuating the completed stack of laminations from the lower portion of the sleeve to a collecting and transferring apparatus for collecting and transferring stacks of laminations while the lower portion of the sleeve is stationary and disconnected from the rotational movement of the other portions of the sleeve.

During the process, the completed stack of laminations is temporarily held in each of the portions of the sleeve by movable stopping elements, which can be control-actuated, for holding and releasing the sliding of the completed stack of blanked laminations through the sleeve.

In particular, the stopping elements are movable between a hold position, in which their free ends protrude inwards with respect to the inner surface of each portion of the sleeve to support a completed stack of laminations, and a release position in which their free ends are concealingly retracted with respect to the inner surface of each portion of the sleeve to allow the completed stack of laminations to pass through.

In an embodiment of the process, the rotation of the blanking die and the upper, intermediate and lower portions of the sleeve is maintained during the steps d) and e) of transferring the completed stack of laminations.

In an alternative embodiment of the process, the rotation of the blanking die and the upper, intermediate and lower portions of the sleeve is stopped for at least one blanking step of the laminate during the steps d) and e) of transferring the completed stack of laminations.

A process according to the present invention is mainly applied to the event in which each completed stack of laminations is composed of laminations that are separate and not constrained to each other.

### Brief description of the drawings

Further aspects and advantages of the present invention will become clearer from the following description, made by way of non-limiting example with reference to the accompanying schematic drawings, wherein:
- Figure 1 is a schematic view of a blanking station;
- Figure 2 is an elevation perspective view of a sleeve according to an embodiment of the present invention;
- Figure 3 is a top plan view of a portion of the sleeve in Figure 2, with the stopping elements in the hold position of a completed stack of laminations;
- Figure 4 is a sectional view according to the plane IV-IV of the sleeve portion of Figure 3;
- Figure 5 is a view similar to that of Figure 3, with the stopping elements in the release position of a completed stack of laminations;
- Figure 6 is a sectional view depicting a step of passing through a completed stack of laminations;
- Figure 7 is a sectional view depicting a subsequent step of passing through a completed stack of laminations with respect to the step of Figure 6;
- Figure 8 is a sectional view depicting a subsequent step of passing through a completed stack of laminations with respect to the step of Figure 7;
- Figure 9 depicts the disconnection of the lower portion of the sleeve from the intermediate/upper portion and
- Figure 10 is a sectional view depicting the final step of evacuating a completed stack of laminations from the sleeve.

### Detailed description

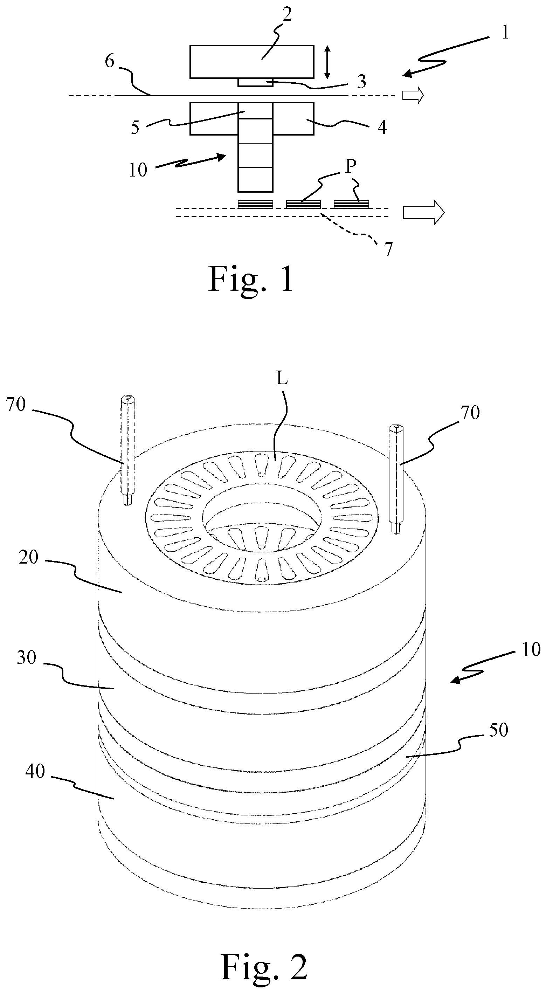

Figure 1 schematically depicts a blanking station 1 in which there is a blanking tool essentially consisting of an upper tool half 2 equipped with a punch 3, and a lower tool half 4 equipped with a blanking die 5. Usually, the upper tool half 2 is movable, whereas the lower tool half 4 is stationary. A metal laminate 6 is passed between the two tool halves 2 and 4, in such a way that the cyclic up-and-down movement of the punch 3 engages the die 5 to blank. The die 5 accommodates the blanked laminations in a lower part thereof, of such dimensions as to lightly brake the blanked laminations and hold them until they are sequentially transferred into the three portions composing the sleeve 10, in the form of completed stacks P consisting of a certain number of laminations, for their evacuation on a transferring apparatus 7, e.g. a conveyor belt or the like. In practice, in the die 5, stacks are formed and consist of a pre-set number of laminations which can be constrained to each other in each stack or separated from each other in each stack.

As is known, to compensate for any inhomogeneities in the thickness of each individual lamination, the die 5 integral to the sleeve 10 will be rotated by a pre-set angle. This takes place at each blanking step, in such a way that each blanked lamination is rotated with respect to the previous lamination and the lamination that will be blanked immediately after.

Figure 2 depicts a rotatable sleeve 10 of a device for collecting completed stacks of blanked laminations. The sleeve 10 comprises an upper portion 20, an intermediate portion 30 and a lower portion 40. The upper portion 20 and the intermediate portion 30 of the sleeve 10 are permanently and rotatably connected to the blanking die 5 (not shown herein) from which laminations are then released, such as those depicted by way of example on the upper part of the sleeve 10 and denoted by the letter L.

In the embodiments depicted herein, the sleeve 10 is cylindrically shaped and has an axis coinciding with the axis of the blanking die. The inner surfaces of the sleeve 10 are shaped and dimensioned in such a way that the laminations L and the completed stacks P of laminations can slide freely.

The sleeve 10 further comprises an engaging member 50 which is control-actuated to rotatably connect the lower portion 40 of the sleeve 10 to the intermediate portion 30 or to release the rotatable connection of the lower portion 40 of the sleeve 10 with respect to the intermediate portion 30 during the step of evacuating a completed stack of laminations.

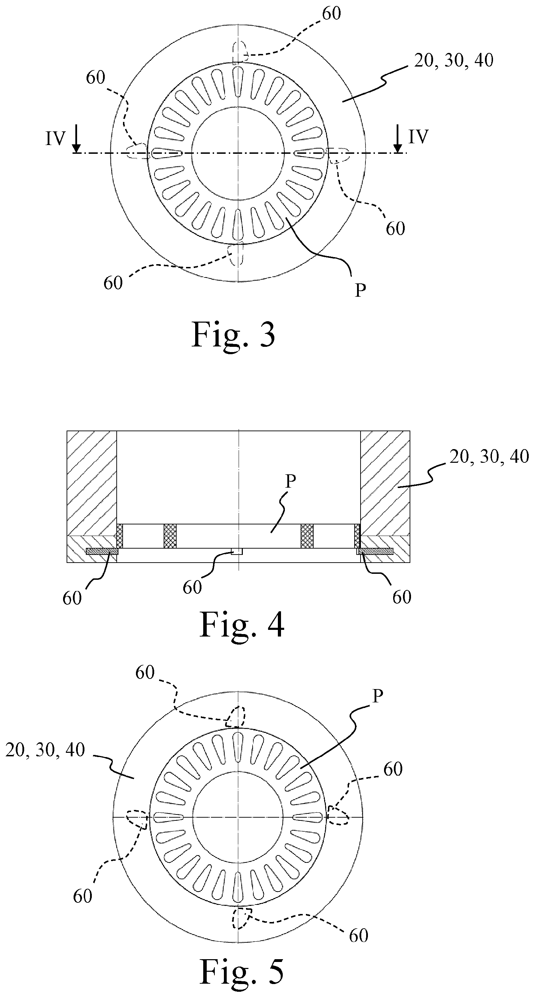

As depicted in Figures 3, 4 and 5, each portion 20, 30 and 40 of the sleeve 10 is equipped with movable stopping elements 60, which can be control-actuated, for holding and releasing the sliding of a completed stack P of blanked laminations through the sleeve 10. In Figures 3 and 4, the movable stopping elements 60 are in the hold position in which their free ends protrude inwards with respect to the inner surface of each portion 20, 30 and 40 of the sleeve 10 to support a completed stack P of laminations. When it is necessary to allow the completed stack P of laminations to pass through any portion 20, 30 and 40 of the sleeve 10, the movable stopping elements 60 are displaced to the release position, as depicted in Figure 5, in which their free ends are concealingly retracted with respect to the inner surface of each portion 20, 30 and 40 of the sleeve 10 to allow the completed stack P of laminations to pass through.

The movable stopping elements 60 of the upper portion 20 and of the intermediate portion 30 of the sleeve 10 are operated, for example, by means of mechanical actuators embedded in the lower tool half 4 of the blanking tool which operate on respective pins 70 (Figure 2), while the movable stopping elements 60, as well as the engaging member 50, of the lower portion 40 can be operated by other separate actuators. The movable stopping elements in the portions 20 and 30 can also be operated by separate actuators in the same way as the movable stopping elements in the lower portion 40. Similarly, the movable stopping elements in the lower portion 40 can be operated by means of mechanical actuators or the like, which are embedded in the lower tool half 4 of the blanking die.

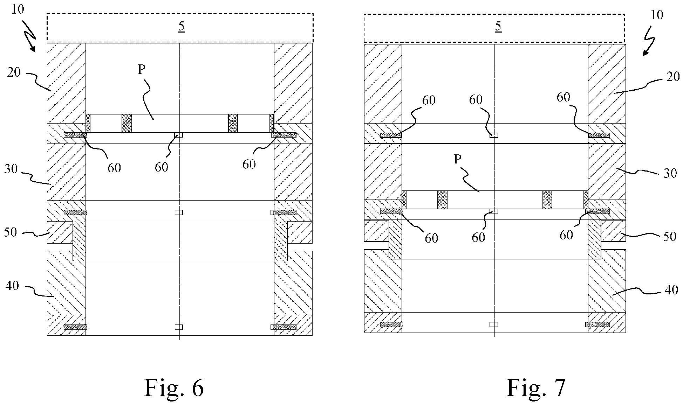

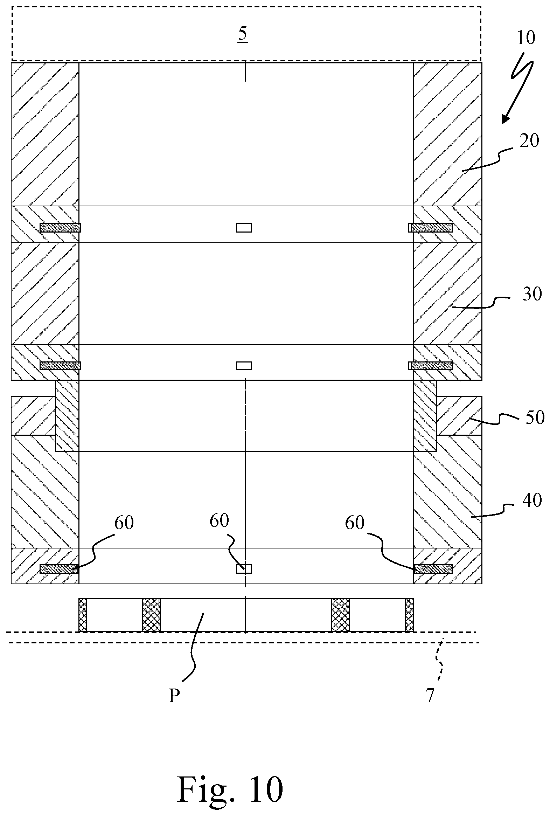

Figures 6 to 10 depict some steps of transferring and evacuating a single completed stack P of laminations, for the sake of clarity avoiding highlighting the additional laminations L and/or other completed stacks P of laminations L passing through.

The completed stack P of laminations is supported in Figure 6 by the stopping elements 60 of the upper portion 20 of the sleeve 10. In this step, all portions 20, 30 and 40 of the sleeve 10 are rotationally integral with the blanking die 5 and all stopping elements 60 are in the hold position.

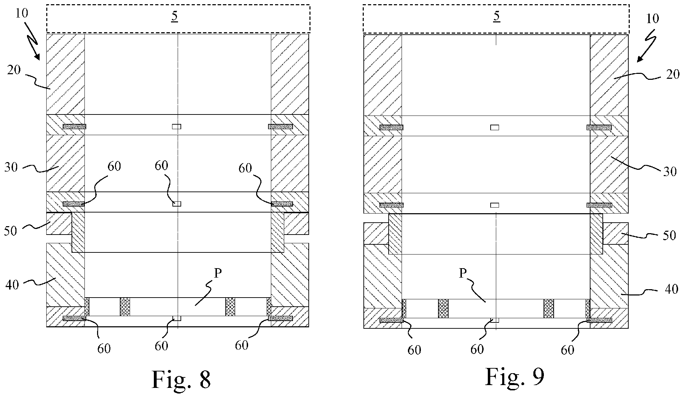

The completed stack P of laminations is then transferred to the intermediate portion 30 of the sleeve 10. This is achieved by gravity by bringing the stopping elements 60 of the upper portion 20 to their release position, while the stopping elements 60 of the intermediate portion 30 are held in their hold position. Once the transfer is complete, the stopping elements 60 of the upper portion 20 are returned again to their hold position, as depicted in the subsequent Figures 8 to 10, while waiting to receive and temporarily hold a new completed stack of laminations.

In this step, all portions 20, 30 and 40 of the sleeve 10 can be kept rotationally integral with the blanking die 5 or, alternatively, at least one blanking step and the respective rotation of the die 5 and sleeve 10 can be temporarily stopped.

In other words, each time a completed stack P of laminations is transferred from a portion of the sleeve 10 to the immediately underlying portion, it can also be necessary to stop at least one blanking step, and therefore the rotation of the die 5 and the sleeve 10, in order to avoid compromising the correct alignment of the laminations inside the sleeve 10. This slightly reduces the productivity, which can still be recovered with a slight increase in the frequency of the strokes of the upper tool and/or the respective punch, but ensures at the same time the correct shape of each completed stack P of laminations even during the transfer inside the sleeve 10.

The completed stack P of laminations is then transferred to the lower portion 40 of the sleeve 10. Similar to the previous step, the stopping elements 60 of the intermediate portion 30 are brought to their release position, while the stopping elements 60 of the lower portion 40 are held in their hold position, in such a way as to stop the transit by gravity of the completed stack P of the laminations. Even in this transferring step, all portions 20, 30 and 40 of the sleeve 10 can remain rotationally integral with the blanking die 5 or undergo a slight stopping of blanking and rotation.

The lower portion 40 of the sleeve 10 is then disconnected from the rotation of the other portions 20 and 30; as shown in Figure 9, this is achieved by controlling the engaging member 50 to disconnect the lower portion 40 from being rotationally driven, which is instead maintained for the other portions 20 and 30 of the sleeve 10. This way, the lower portion 40 is stationary, whereas the remaining portions 20 and 30 of the sleeve can possibly continue to rotate together with the die 5 and to receive additional laminations and/or completed stacks of laminations.

Finally, once the lower portion 40 of the sleeve 10 is stationary, the completed stack P of laminations can be evacuated from sleeve 10 on a transferring apparatus 7 without compromising the correct axial alignment of the laminations in the completed stack P exiting the sleeve 10. The evacuation is achieved by moving the stopping elements 60 of the lower section 40 to their release position, thus allowing the completed stack P of laminations to be rested on the transferring apparatus 7. Once the evacuating step has been carried out, the engaging member 50 will be activated to rotationally reconnect the lower portion 40 with the intermediate portion 30 of the sleeve 10.

Various changes can be made to the embodiment described so far without departing from the scope of the present invention, as defined by the accompanying claims. For example, the shape of the laminations L and/or the completed stacks P can be different from those depicted by way of example. Other types of actuations and kinematics of the various members, geometry, number and kinematics of the movable stopping elements, number of portions of the sleeve, kinematics and cycle of transferring the completed stacks of laminations passing through the sleeve can also be provided and can be different from those depicted so far. Similarly, the actuators of the various moving members can be of various types in addition to mechanical ones, e.g. pneumatic, electromechanical or similar types.

## Claims

1. A device for collecting and evacuating completed stacks (P) of blanked and stacked laminations from a blanking tool having an upper tool half (2) and a lower tool half (4), comprising at least one sleeve (10) which can be rotated about the axis of a blanking die (5) to which it is rotatably constrained, wherein said sleeve (10) is arranged between the blanking die (5) embedded in the lower tool half (4) and a collecting and transferring apparatus (7) for collecting and transferring the completed stacks (P) of laminations, **characterised in that** said sleeve (10) comprises an upper portion (20), an intermediate portion (30) and a lower portion (40), wherein the upper portion (20) and the intermediate portion (30) of the sleeve (10) are permanently and rotatably connected to the blanking die (5), and wherein an engaging member (50) can be control-actuated to rotatably connect the lower portion (40) of the sleeve (10) to the intermediate/upper portion (30, 20) or release the rotatable connection of the lower portion (40) of the sleeve (10) with respect to the intermediate/upper portion (30, 20).

2. The device according to claim 1, wherein each upper (20), intermediate (30) and lower (40) portion of the sleeve (10) is equipped with movable stopping elements (60), which can be control-actuated, for holding and releasing the sliding of a completed stack (P) of blanked laminations through the sleeve (10).

3. The device according to claim 2, wherein said stopping elements (60) are movable between a hold position, in which their free ends protrude inwards with respect to the inner surface of each portion of the sleeve (10) to support a completed stack (P) of laminations, and a release position in which their free ends are concealingly retracted with respect to the inner surface of each portion of the sleeve (10) to allow the completed stack (P) of laminations to pass through.

4. The device according to claims 1 and 2, wherein at least the movable stopping elements (60) of the upper portion (20) and of the intermediate portion (30) of the sleeve (10) are operated by actuators embedded in the blanking tool.

5. The device according to claim 1, wherein said sleeve (10) is cylindrical in shape and has an axis coinciding with the axis of the blanking die (5).

6. A blanking tool for producing laminations, each of which is rotated by a pre-set angle with respect to a previously blanked lamination, and then collected in stacks composed of a pre-set number of laminations inside a sleeve (10) before evacuating each completed stack (P) from the tool toward a collecting and transferring apparatus (7) for collecting and transferring the completed stacks (P) of laminations, **characterised by** comprising a device for collecting and evacuating blanked and stacked laminations according to claims 1 to 5.

7. A process for collecting and evacuating completed stacks (P) of blanked and stacked laminations in a blanking tool having an upper tool half (2) and a lower tool half (4), wherein the device comprises at least one sleeve (10) which can be rotated about the axis of a blanking die (5) to which it is rotatably constrained, wherein said sleeve (10) is embedded in the lower tool half (4), with the axis coinciding with the axis of the die, and a collecting and transferring apparatus (7) for collecting and transferring completed stacks (P) of laminations, wherein said sleeve (10) comprises an upper portion (20), an intermediate portion (30) and a lower portion (40), and wherein at least the upper portion (20) and the intermediate portion (30) of the sleeve (10) are permanently and rotatably connected to the blanking die (5), the process being **characterised by** the steps of:
a) providing a control-actuated engaging member (50) for rotatably connecting the lower portion (40) of the sleeve (10) to the intermediate/upper portion (30, 20) or releasing the rotatable connection of the lower portion (40) of the sleeve (10) with respect to the intermediate/upper portion (30, 20);
b) blanking each of said laminations by rotating the blanking die (5) each time by a pre-set angle and collecting each lamination, which is rotated with respect to the underlying one, to form a stack of a pre-set number of laminations;
c) temporarily holding the completed stack (P) of laminations blanked from the overlying die in the upper portion (20) of the sleeve (10) while the process of blanking and rotating the laminations of a subsequent stack continues, wherein the rotation of the blanking die (5) and the upper (20), intermediate (30) and lower (40) portions of the sleeve (10), is maintained;
d) transferring said completed stack (P) of laminations from the upper portion (20) to the intermediate portion (30) of the sleeve (10) and temporarily holding it in the intermediate portion (30) of the sleeve (10);
e) transferring said completed stack (P) of laminations from the intermediate portion (30) to the lower portion (40) of the sleeve (10) and temporarily holding it in the lower portion (40) of the sleeve (10);
f) operating said engaging member (50) for releasing the rotatable connection of the lower portion (40) of the sleeve (10) with respect to the intermediate/upper portion (30, 20);
g) evacuating said completed stack (P) of laminations from the lower portion (40) of the sleeve (10) to a collecting and transferring apparatus (7) for collecting and transferring completed stacks (P) of laminations while the lower portion (40) of the sleeve (10) is stationary and disconnected from the rotational movement of the other portions of the sleeve (10).

8. The process according to claim 7, wherein said completed stack (P) of laminations is temporarily held in each of the portions of the sleeve (10) by movable stopping elements (60), which can be control-actuated, for holding and releasing the sliding of said completed stack (P) of blanked laminations through the sleeve (10).

9. The process according to claim 8, wherein said stopping elements (60) are movable between a hold position, in which their free ends protrude inwards with respect to the inner surface of each portion of the sleeve (10) to support a completed stack (P) of laminations, and a release position in which their free ends are concealingly retracted with respect to the inner surface of each portion of the sleeve (10) to allow the completed stack (P) of laminations to pass through.

10. The process according to claim 7, wherein during said steps d) and e) of transferring the completed stack (P) of laminations, the rotation of the blanking die (5) and the upper, intermediate and lower portions of the sleeve (10), is maintained.

11. The process according to claim 7, wherein during said steps d) and e) of transferring the completed stack (P) of laminations, the rotation of the blanking die (5) and the upper, intermediate and lower portions of the sleeve (10), is stopped for at least one blanking step of the laminate.

12. The process according to claim 7, wherein each completed stack (P) of laminations is composed of separate laminations not constrained to each other.

## Patentansprüche

1. Vorrichtung zum Sammeln und Austragen fertiger Stapel (P) von gestanzten und gestapelten Lamellen aus einem Stanzwerkzeug mit einer oberen Werkzeughälfte (2) und einer unteren Werkzeughälfte (4),
umfassend mindestens eine Hülse (10), die um die Achse einer Stanzmatrize (5), mit der sie drehbar gekoppelt ist, drehbar ist, wobei die Hülse (10) zwischen der in der unteren Werkzeughälfte (4) angeordneten Stanzmatrize (5) und einer Sammel- und Übertragungsvorrichtung (7) zum Sammeln und Übertragen der fertigen Stapel (P) von Lamellen angeordnet ist, **dadurch gekennzeichnet, dass** die Hülse (10) einen oberen Abschnitt (20), einen Zwischenabschnitt (30) und einen unteren Abschnitt (40) umfasst, wobei der obere Abschnitt (20) und der Zwischenabschnitt (30) der Hülse (10) dauerhaft und drehbar mit der Stanzmatrize (5) verbunden sind, und wobei ein Eingriffselement (50) steuerbar betätigbar ist, um den unteren Abschnitt (40) der Hülse (10) drehbar mit dem Zwischen-/oberen Abschnitt (30, 20) zu verbinden oder die drehbare Verbindung des unteren Abschnitts (40) der Hülse (10) relativ zum Zwischen-/oberen Abschnitt (30, 20) zu lösen.

2. Vorrichtung nach Anspruch 1, wobei jeder obere (20), Zwischen- (30) und untere Abschnitt (40) der Hülse (10) mit beweglichen Anschlagelementen (60) ausgestattet ist, die steuerbar betätigt werden können, zum Halten und Freigeben des Gleitens eines fertigen Stapels (P) von gestanzten Lamellen durch die Hülse (10).

3. Vorrichtung nach Anspruch 2, wobei die Anschlagelemente (60) zwischen einer Halteposition, in der ihre freien Enden relativ zur Innenfläche jedes Abschnitts der Hülse (10) nach innen vorstehen, um einen fertigen Stapel (P) von Lamellen zu tragen, und einer Freigabeposition bewegbar sind, in der ihre freien Enden relativ zur Innenfläche jedes Abschnitts der Hülse (10) verdeckt zurückgezogen sind, um den Durchgang des fertigen Stapels (P) von Lamellen zu ermöglichen.

4. Vorrichtung nach den Ansprüchen 1 und 2, wobei zumindest die beweglichen Anschlagelemente (60) des oberen Abschnitts (20) und des Zwischenabschnitts (30) der Hülse (10) durch in das Stanzwerkzeug integrierte Aktuatoren betätigt werden.

5. Vorrichtung nach Anspruch 1, wobei die Hülse (10) zylindrisch ausgebildet ist und eine Achse aufweist, die mit der Achse der Stanzmatrize (5) zusammenfällt.

6. Stanzwerkzeug zur Herstellung von Lamellen, von denen jede gegenüber einer zuvor gestanzten Lamelle um einen vorgegebenen Winkel gedreht wird und anschließend in Stapeln gesammelt wird, die aus einer vorgegebenen Anzahl von Lamellen bestehen, innerhalb einer Hülse (10), bevor jeder fertige Stapel (P) aus dem Werkzeug zu einer Sammel- und Übertragungsvorrichtung (7) zum Sammeln und Übertragen der fertigen Stapel (P) von Lamellen ausgetragen wird, **dadurch gekennzeichnet, dass** es eine Vorrichtung zum Sammeln und Austragen von gestanzten und gestapelten Lamellen nach einem der Ansprüche 1 bis 5 umfasst.

7. Verfahren zum Sammeln und Austragen fertiger Stapel (P) von gestanzten und gestapelten Lamellen in einem Stanzwerkzeug mit einer oberen Werkzeughälfte (2) und einer unteren Werkzeughälfte (4), wobei die Vorrichtung mindestens eine Hülse (10) umfasst, die um die Achse einer Stanzmatrize (5), mit der sie drehbar gekoppelt ist, drehbar ist, wobei die Hülse (10) in der unteren Werkzeughälfte (4) angeordnet ist, wobei ihre Achse mit der Achse der Matrize zusammenfällt, und eine Sammel- und Übertragungsvorrichtung (7) zum Sammeln und Übertragen fertiger Stapel (P) von Lamellen vorgesehen ist, wobei die Hülse (10) einen oberen Abschnitt (20), einen Zwischenabschnitt (30) und einen unteren Abschnitt (40) umfasst und wobei zumindest der obere Abschnitt (20) und der Zwischenabschnitt (30) der Hülse (10) dauerhaft und drehbar mit der Stanzmatrize (5) verbunden sind, **gekennzeichnet durch** die Schritte:
a) Bereitstellen eines steuerbar betätigbaren Eingriffselements (50), um den unteren Abschnitt (40) der Hülse (10) drehbar mit dem Zwischen-/oberen Abschnitt (30, 20) zu verbinden oder die drehbare Verbindung des unteren Abschnitts (40) der Hülse (10) relativ zum Zwischen-/oberen Abschnitt (30, 20) zu lösen;
b) Stanzen jeder der Lamellen durch jeweils eine Drehung der Stanzmatrize (5) um einen vorgegebenen Winkel und Sammeln jeder Lamelle, die gegenüber der darunterliegenden gedreht ist, um einen Stapel aus einer vorgegebenen Anzahl von Lamellen zu bilden;
c) vorübergehendes Halten des fertigen Stapels (P) von Lamellen, die von der darüberliegenden Matrize gestanzt wurden, im oberen Abschnitt (20) der Hülse (10), während der Prozess des Stanzens und Drehens der Lamellen eines nachfolgenden Stapels fortgesetzt wird, wobei die Drehung der Stanzmatrize (5) sowie der oberen (20), Zwischen- (30) und unteren (40) Abschnitte der Hülse (10) beibehalten wird;
d) Überführen des fertigen Stapels (P) von Lamellen vom oberen Abschnitt (20) in den Zwischenabschnitt (30) der Hülse (10) und vorübergehendes Halten im Zwischenabschnitt (30) der Hülse (10);
e) Überführen des fertigen Stapels (P) von Lamellen vom Zwischenabschnitt (30) in den unteren Abschnitt (40) der Hülse (10) und vorübergehendes Halten im unteren Abschnitt (40) der Hülse (10);
f) Betätigen des Eingriffselements (50) zum Lösen der drehbaren Verbindung des unteren Abschnitts (40) der Hülse (10) relativ zum Zwischen-/oberen Abschnitt (30, 20);
g) Austragen des fertigen Stapels (P) von Lamellen aus dem unteren Abschnitt (40) der Hülse (10) zu einer Sammel- und Übertragungsvorrichtung (7) zum Sammeln und Übertragen von fertigen Stapeln (P) von Lamellen, während der untere Abschnitt (40) der Hülse (10) stillsteht und von der Drehbewegung der übrigen Abschnitte der Hülse (10) entkoppelt ist.

8. Verfahren nach Anspruch 7, wobei der fertige Stapel (P) von Lamellen in jedem der Abschnitte der Hülse (10) durch bewegliche Anschlagelemente (60) vorübergehend gehalten wird, die steuerbar betätigt werden können, zum Halten und Freigeben des Durchtritts des fertigen Stapels (P) von Lamellen durch die Hülse (10).

9. Verfahren nach Anspruch 8, wobei die Anschlagelemente (60) zwischen einer Halteposition und einer Freigabeposition bewegbar sind, wobei sie in der Halteposition mit ihren freien Enden nach innen über die Innenfläche jedes Abschnitts der Hülse (10) vorstehen, um einen fertigen Stapel (P) von Lamellen zu stützen, und wobei sie in der Freigabeposition mit ihren freien Enden gegenüber der Innenfläche jedes Abschnitts der Hülse (10) zurückgezogen angeordnet sind, um den Durchtritt des fertigen Stapels (P) von Lamellen zu ermöglichen.

10. Verfahren nach Anspruch 7, wobei während der Schritte d) und e) des Überführens des fertigen Stapels (P) von Lamellen die Drehung der Stanzmatrize (5) sowie der oberen, Zwischen- und unteren Abschnitte der Hülse (10) beibehalten wird.

11. Verfahren nach Anspruch 7, wobei während der Schritte d) und e) des Überführens des fertigen Stapels (P) von Lamellen die Drehung der Stanzmatrize (5) sowie der oberen, Zwischen- und unteren Abschnitte der Hülse (10) für mindestens einen Stanzvorgang der Lamellen angehalten wird.

12. Verfahren nach Anspruch 7, wobei jeder fertige Stapel (P) aus voneinander nicht verbundenen einzelnen Lamellen besteht.

## Revendications

1. Dispositif destiné à collecter et à évacuer des piles (P) complètes de tôles découpées et empilées à partir d'un outil de découpage comportant une moitié supérieure d'outil (2) et une moitié inférieure d'outil (4), comprenant au moins un manchon (10) pouvant tourner autour de l'axe d'une matrice de découpage (5) à laquelle il est fixé de manière rotative, dans lequel ledit manchon (10) est disposé entre la matrice de découpage (5) encastrée dans la moitié inférieure d'outil (4) et un dispositif de collecte et de transfert (7) destiné à collecter et à transférer les piles (P) complètes de tôles, **caractérisé en ce que** ledit manchon (10) comprend une partie supérieure (20), une partie intermédiaire (30) et une partie inférieure (40), dans lequel la partie supérieure (20) et la partie intermédiaire (30) du manchon (10) sont reliées de manière permanente et rotative à la matrice de découpage (5), et dans lequel un élément d'engagement (50) peut être actionné de manière commandée pour relier de manière rotative la partie inférieure (40) du manchon (10) à la partie intermédiaire/supérieure (30, 20) ou pour libérer la liaison rotative de la partie inférieure (40) du manchon (10) par rapport à la partie intermédiaire/supérieure (30, 20).

2. Dispositif selon la revendication 1, dans lequel chaque partie supérieure (20), intermédiaire (30) et inférieure (40) du manchon (10) est équipée d'éléments d'arrêt mobiles (60), pouvant être actionnés de manière commandée, pour retenir et libérer le glissement d'une pile complète (P) de tôles découpées à travers le manchon (10).

3. Dispositif selon la revendication 2, dans lequel lesdits éléments d'arrêt (60) sont mobiles entre une position de retenue, dans laquelle leurs extrémités libres font saillie vers l'intérieur par rapport à la surface intérieure de chaque partie du manchon (10) pour supporter une pile complète (P) de tôles, et une position de libération dans laquelle leurs extrémités libres sont rétractées de manière dissimulée par rapport à la surface intérieure de chaque partie du manchon (10) pour permettre le passage de la pile complète (P) de tôles.

4. Dispositif selon les revendications 1 et 2, dans lequel au moins les éléments d'arrêt mobiles (60) de la partie supérieure (20) et de la partie intermédiaire (30) du manchon (10) sont actionnés par des actionneurs intégrés dans l'outil de découpage.

5. Dispositif selon la revendication 1, dans lequel ledit manchon (10) est de forme cylindrique et présente un axe coïncidant avec l'axe de la matrice de découpage (5).

6. Outil de découpage destiné à produire des tôles, dont chacune est tournée d'un angle prédéfini par rapport à une tôle précédemment découpée, puis regroupées en piles composées d'un nombre prédéfini de tôles à l'intérieur d'un manchon (10) avant d'évacuer chaque pile (P) complète de l'outil vers un dispositif de collecte et de transfert (7) destiné à collecter et transférer les piles (P) complètes de tôles, **caractérisé en ce qu'**il comprend un dispositif destiné à collecter et évacuer les tôles découpées et empilées selon les revendications 1 à 5.

7. Procédé de collecte et d'évacuation de piles (P) complètes de tôles découpées et empilées dans un outil de découpage comportant une moitié supérieure d'outil (2) et une moitié inférieure d'outil (4), dans lequel le dispositif comprend au moins un manchon (10) pouvant tourner autour de l'axe d'une matrice de découpage (5) à laquelle il est fixé de manière rotative, dans lequel ledit manchon (10) est encastré dans la moitié inférieure d'outil (4), l'axe coïncidant avec l'axe de la matrice, et un dispositif de collecte et de transfert (7) destiné à collecter et à transférer des piles (P) complètes de tôles, dans lequel ledit manchon (10) comprend une partie supérieure (20), une partie intermédiaire (30) et une partie inférieure (40), et dans lequel au moins la partie supérieure (20) et la partie intermédiaire (30) du manchon (10) sont reliées de manière permanente et rotative à la matrice de découpage (5), le procédé étant **caractérisé par** les étapes suivantes :
a) fournir un élément d'engagement actionné par commande (50) pour relier de manière rotative la partie inférieure (40) du manchon (10) à la partie intermédiaire/supérieure (30, 20) ou pour libérer la liaison rotative de la partie inférieure (40) du manchon (10) par rapport à la partie intermédiaire/supérieure (30, 20) ;
b) découper chacune desdites tôles en faisant tourner la matrice de découpage (5) à chaque fois d'un angle prédéfini et en collectant chaque tôle, qui est tournée par rapport à celle située en dessous, pour former une pile d'un nombre prédéfini de tôles ;
c) maintenir temporairement la pile (P) complète de tôles découpées à partir de la matrice sus-jacente dans la partie supérieure (20) du manchon (10) pendant que le processus de découpage et de rotation des tôles d'une pile suivante se poursuit, dans lequel la rotation de la matrice de découpage (5) et des parties supérieure (20), intermédiaire (30) et inférieure (40) du manchon (10) est maintenue ;
d) transférer ladite pile (P) complète de tôles de la partie supérieure (20) vers la partie intermédiaire (30) du manchon (10) et la maintenir temporairement dans la partie intermédiaire (30) du manchon (10) ;
e) transférer ladite pile (P) complète de tôles de la partie intermédiaire (30) vers la partie inférieure (40) du manchon (10) et la maintenir temporairement dans la partie inférieure (40) du manchon (10) ;
f) actionner ledit élément d'engagement (50) pour libérer la liaison rotative de la partie inférieure (40) du manchon (10) par rapport à la partie intermédiaire/supérieure (30, 20) ;
g) évacuer ladite pile (P) complète de tôles de la partie inférieure (40) du manchon (10) vers un dispositif de collecte et de transfert (7) destiné à collecter et transférer les piles (P) complètes de tôles, tandis que la partie inférieure (40) du manchon (10) est immobile et déconnectée du mouvement de rotation des autres parties du manchon (10).

8. Procédé selon la revendication 7, dans lequel ladite pile (P) complète de tôles est temporairement maintenue dans chacune des parties du manchon (10) par des éléments d'arrêt mobiles (60), qui peuvent être actionnés de manière commandée, pour retenir et libérer le glissement de ladite pile (P) complète de tôles découpées à travers le manchon (10).

9. Procédé selon la revendication 8, dans lequel lesdits éléments d'arrêt (60) sont mobiles entre une position de maintien, dans laquelle leurs extrémités libres font saillie vers l'intérieur par rapport à la surface intérieure de chaque partie du manchon (10) pour supporter une pile (P) complète de tôles, et une position de libération dans laquelle leurs extrémités libres sont rétractées de manière dissimulée par rapport à la surface intérieure de chaque partie du manchon (10) pour permettre le passage de la pile (P) complète de tôles.

10. Procédé selon la revendication 7, dans lequel, pendant lesdites étapes d) et e) de transfert de la pile (P) complète de tôles, la rotation de la matrice de découpage (5) et des parties supérieure, intermédiaire et inférieure du manchon (10) est maintenue.

11. Procédé selon la revendication 7, dans lequel, pendant lesdites étapes d) et e) de transfert de la pile (P) complète de tôles, la rotation de la matrice de découpage (5) et des parties supérieure, intermédiaire et inférieure du manchon (10) est arrêtée pendant au moins une étape de découpage de la tôle.

12. Procédé selon la revendication 7, dans lequel chaque pile (P) complète de tôles est composée de tôles distinctes non contraintes les unes aux autres.
